Europäisches Patentamt

European Patent Office

Office européen des brevets

(11) Numéro de publication: **0 425 342 A1**

# DEMANDE DE BREVET EUROPEEN

(21) Numéro de dépôt: 90402912.1

(22) Date de dépôt: 17.10.90

(51) Int. Cl.⁵: **B62D 51/00**

(30) Priorité: 23.10.89 FR 8913821

(43) Date de publication de la demande:
02.05.91 Bulletin 91/18

(84) Etats contractants désignés:
AT BE CH DE DK ES FR GB GR IT LI LU NL SE

(71) Demandeur: GROUPEMENT D'INTERET
ECONOMIQUE GOLF'INOV
Sainte Marie La Blanche
F-21200 Beaune(FR)

(72) Inventeur: Vautelin, Francis
32, Grande Rue
F-28360 Prunay Le Gillon(FR)
Inventeur: Perrier, Robert
Pratz
F-39170 Saint Lupicin(FR)

(74) Mandataire: Doireau, Marc et al
OFFICE BLETRY 2, Boulevard de Strasbourg
F-75010 Paris(FR)

(54) **Chariot de golf motorisé.**

(57) Le chariot de golf motorisé conforme à l'invention comprend un châssis formé d'au moins deux supports (1a, 1b) assemblés l'un à l'autre par un dispositif de liaison de type rotatif (5) constitué de deux parties mâle (5a) et femelle (5b) emboîtées l'une dans l'autre et respectivement solidaires des deux supports (1a, 1b) du châssis. L'un des supports porte deux roues motrices (3), un moteur électrique (M) et un batterie (B), l'autre support étant essentiellement constitué d'un manche de manoeuvre (6a, 6b) replicable terminé à une extrémité par une poignée (4) ayant un organe à commande manuelle (60) relié au moteur (M) par une liaison électrique (L) incluant une prise intermédiaire dont les deux éléments (63a, 63b) sont solidaires des deux parties (5a, 5b) du dispositif de liaison (5).

FIG. 2

La présente invention concerne un chariot de golf motorisé, du type comprenant un châssis formé d'au moins deux supports assemblés l'un à l'autre par un dispositif de liaison de type rotatif constitué de deux parties mâle et femelle emboîtées l'une dans l'autre et respectivement solidaires des deux supports du châssis, l'un des supports portant deux roues motrices, un moteur électrique et une batterie, l'autre support étant essentiellement constitué d'un manche de manoeuvre terminé à une extrémité par une poignée ayant un organe à commande manuelle relié au moteur par une liaison électrique incluant une prise intermédiaire.

D'une manière générale, le châssis d'un chariot de golf motorisé ou non est maintenant de type pliable ou démontable pour en diminuer notablement l'encombrement et en faciliter ainsi le transport dans un coffre de voiture par exemple.

Dans le cas d'un chariot motorisé à châssis démontable, la présence d'une prise de raccordement intermédiaire est rendue nécessaire au niveau de la liaison électrique entre le moteur porté par un premier support du châssis et son organe de commande porté par le manche de manoeuvre qui constitue un deuxième support du châssis fixé de façon amovible au premier support. Cette liaison électrique avec prise intermédiaire est généralement un câble électricque souple passant à l'extérieur du châssis.

Le but de l'invention est de concevoir un chariot de golf motorisé avec une liaison électrique d'un type nouveau entre le moteur et son organe de commande, cette liaison étant plus particulièrement adaptée à un châssis du type de celui décrit dans le document FR-2 621 251 au nom du demandeur.

Le châssis décrit dans le document précité est avantageusement constitué de deux supports assemblés l'un à l'autre par un dispositif de liaison de type rotatif comprenant deux parties mâle et femelle emboîtées l'une dans l'autre et respectivement solidaires des deux supports du châssis. Ce châssis est tel que les deux supports peuvent prendre deux positions l'un par rapport à l'autre tout en restant liés l'un à l'autre. Dans une première position ou position d'utilisation du chariot, les deux supports sont globalement à 90° l'un de l'autre (le manche de manoeuvre étant dans un plan perpendiculaire à l'axe des roues et à mi-distance de celles-ci), et dans la deuxième position ou position de rangement, les deux supports sont globalement coplanaires (le manche de manoeuvre étant sensiblement parallèle à l'axe des roues).

Selon l'invention, les éléments mâle et femelle de la prise intermédiaire ou connecteur sont respectivement supporté par les deux parties mâle de femelle du dispositif de liaison, et ils sont alignés sur l'axe de rotation des deux supports du châssis.

Etant donné que le mouvement de rotation entre les deux supports du châssis du type précité pour faire passer le chariot de la position utilisation à la position rangement, ou vice versa, est précédé par un mouvement de translation des deux supports suivant leur axe de rotation pour les débloquer l'un de l'autre, c'est au cours de ce déplacement axial dans une direction (déblocage des deux supports) ou dans la direction opposée (blocage des deux supports) que s'effectue automatiquement la séparation ou l'emboîtement des éléments mâle et femelle du connecteur auxiliaire.

Lorsque le chariot est en position utilisation ou en position rangement avec les deux supports du châssis immobilisés l'un à l'autre, les éléments mâle et femelle du connecteur auxiliaire sont emboîtés l'un dans l'autre, ce qui laisse supposer que le connecteur assure dans les deux cas la continuité électrique de la liaison sur laquelle il est intercalé. Dans ces conditions, le moteur peut être entraîné à rotation si l'organe de commande situé sur la poignée n'est pas en position arrêt. Aussi, lorsque le chariot est en position de rangement, et bien que les éléments mâle et femelle du connecteur soient emboîtés l'un dans l'autre, la continuité de la liaison est néanmoins interrompue au niveau du connecteur. Pour cela, le connecteur de forme cylindrique est choisi par exemple avec un nombre de contacts supérieur au nombre nécessaire pour assurer la continuité de la liaison électrique, de sorte que les conditions précitées sont satisfaites par un choix approprié des contacts mâles et femelles réellement utilisés.

Selon une autre disposition de l'invention, le moteur est logé dans un boîtier sur lequel vient se fixer de façon amovible un autre boîtier dans lequel est logée la batterie, avec une liaison électrique extérieure qui assure la connexion entre la batterie et un circuit électronique de variation de vitesse du moteur, cette liaison se raccordant à la batterie par une prise que est supportée par le boîtier de la batterie et qui sert également à brancher la batterie sur une source d'alimentation externe afin de la recharger.

Selon une autre disposition de l'invention, le manche de commande est formé de deux demi-bras articulés l'un à l'autre autour d'un axe de pivotement excentré, et il comprend des moyens pour limiter le mouvement pivotant des deux demi-bras entre deux positions extrêmes correspondant respectivement au manche replié et déplié, et des moyens pour bloquer en position les deux demi-bras en position dépliée du manche.

Selon une autre disposition de l'invention, le chariot est tracté ou propulsé suivant le sens de montage du manche de manoeuvre.

Grâce à ces différentes dispositions, le passage du chariot des positions rangement à utilisation, ou vice versa, ne nécessite aucune intervention manuelle au niveau du connecteur intermédiaire intercalé sur la liaison électrique entre l'organe de commande situé sur la poignée du manche de manoeuvre et le moteur.

D'autres avantages, caractéristiques et détails de l'invention ressortiront de la description explicative qui va suivre faite en référence aux dessins annexés donnés uniquement à titre d'exemple et dans lesquels :

- la figure 1 est une vue en perspective d'un chariot de golf motorisé conforme à l'invention et représenté dans sa position de rangement,

la figure 2 est une vue en perspective éclatée du chariot de golf représenté à la figure 1,

- la figure 3 est une vue en perspective partielle pour montrer l'assemblage des deux demi-bras qui forment le manche de manoeuvre du chariot de golf,

- la figure 4 est une vue en perspective partielle illustrant le dispositif de liaison de type rotatif entre les deux supports du châssis,

- la figure 5 est une vue avec arrachements partiels du dispositif de liaison entre les deux supports du châssis dans la position de rangement du chariot de golf,

- la figure 6 est une vue schématique partielle du système d'entraînement des roues du chariot de golf, et

- les figures 7, 7a et 8, 8a sont des vues de principe schématiques illustrant le chariot de golf tracté ou propulsé suivant le sens de montage de son manche de manoeuvre.

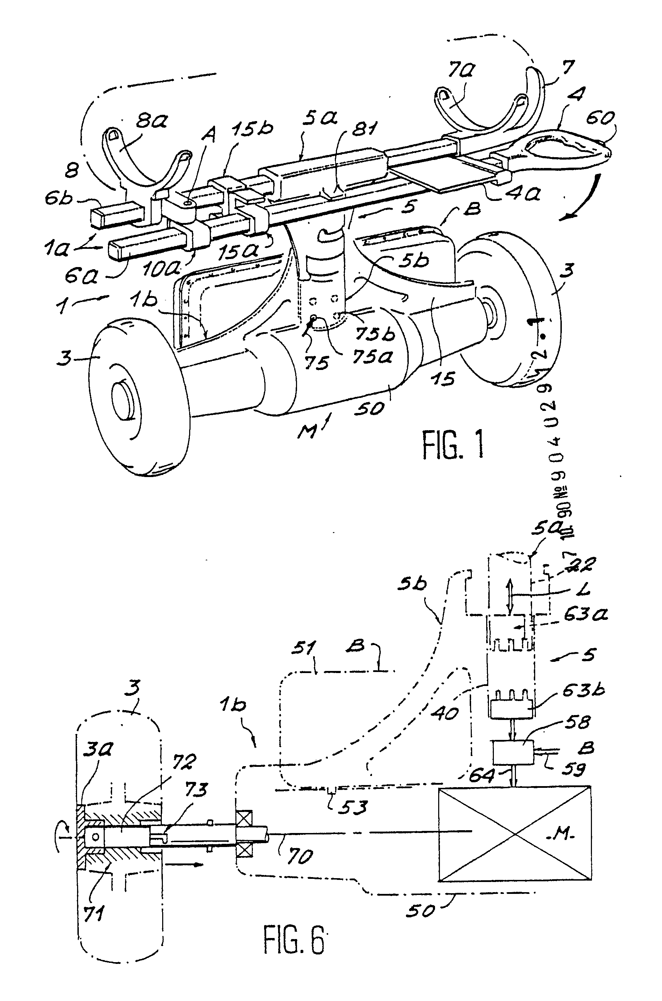

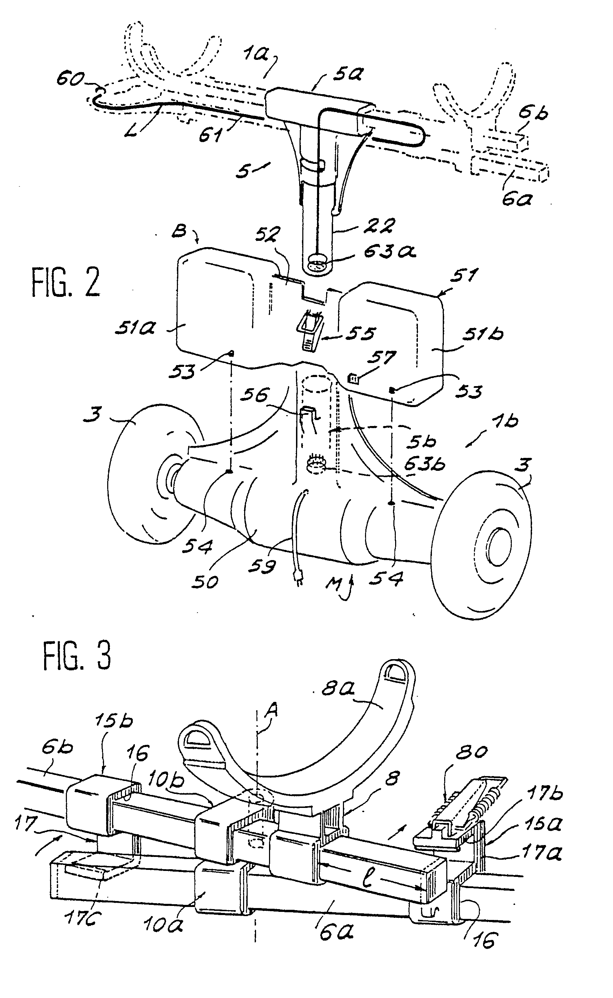

En se reportant aux figures 1 et 2, le chariot de golf motorisé conforme à l'invention comprend un châssis 1 qui supporte essentiellement un sac amovible (non représenté), deux roues motrices 3, un moteur électrique M, une source d'énergie autonome telle une batterie B, une poignée de manoeuvre et de guidage 4 avec un élément à commande manuelle 60 relié par une liaison électrique L à un circuit électronique 58 de variation de vitesse du moteur M.

Le châssis 1 est formé de deux supports 1a, 1b articulés l'un à l'autre par un dispositif de liaison 5 de type rotatif.

Le support 1a est formé de deux demi-bras 6a, 6b sensiblement de même longueur et qui constituent le manche de manoeuvre du chariot. Dans l'exemple considéré ici, chaque demi-bras 6a, 6b est constitué d'une tige métallique à section rectangulaire, en aluminium par exemple.

En considérant plus particulièrement la figure 3, les deux demi-bras 6a, 6b sont articulés l'un à l'autre autour d'un axe de pivotement A supporté par deux blocs 10a, 10b respectivement solidaires des deux demi-bras 6a, 6b. Chaque bloc 10a, 10b avantageusement en matière plastique est traversé de part en part par une ouverture 12 à section rectangulaire, de manière à pouvoir être monté coulissant sur le demi-bras 6a, 6b associé. Chaque bloc 10a, 10b présente également un trou 13 le traversant de part en part, mais suivant un axe perpendiculaire à l'axe de l'ouverture 12 associé. Chaque bloc 10a, 10b est monté vers une extrémité du bras 6a, 6b associé en étant distant de cette extrémité d'une longueur 1.

L'axe de pivotement A est logé librement dans les deux trous 13 des deux blocs 10a, 10b et est maintenu en position par tout moyen approprié. Selon ce montage, l'axe A est désaxé par rapport aux deux demi-bras 6a, 6b et s'étend perpendiculairement à ceux-ci. En considérant un demi-bras fixe, l'autre demi-bras peut pivoter de 180° entre deux positions extrêmes correspondant aux deux positions repliée et dépliée du manche de manoeuvre, respectivement. A cet effet, chaque demi-bras 6a, 6b supporte un second bloc 15a, 15b avantageusement en matière plastique qui remplit deux fonctions: une fonction de limitation du pivotement et une fonction de blocage en position dépliée des deux demi-bras 6a, 6b.

Chaque second bloc 15a, 15b est traversé de part en part par une ouverture 16 à section rectangulaire, de manière à pouvoir être monté coulissant sur le demi-bras 6a, 6b associé. Chaque bloc 15a, 15b présente un logement 17 en U dont la base 17a est formée par un prolongement d'une face du bloc, dont une première branche est formée par la face extérieure du bloc perpendiculaire à la base 17a et dont la deuxième branche 17b est formée par une paroi parallèle et en regard de ladite face du bloc. En outre, la surface d'extrémité libre de la paroi 17b présente un rebord interne 17c. Chaque logement 17 est sensiblement aux dimensions de la section de chaque demi-bras 6a, 6b.

Chaque second bloc 15a, 15b est monté sur le demi-bras associé 6a, 6b de manière à ce que son logement 17 puisse recevoir la partie d'extrémité (adjacente à l'axe de pivotement A) de l'autre demi-bras.

En se reportant à nouveau à la figure 1, le demi-bras 6a supporte le poignée 4 vers son extrémité opposée à l'axe de pivotement A (figure 1). Cette poignée 4, avantageusement en matière plastique, présente un embout tubulaire qui permet de l'emmancher à force à l'extrémité du demi-bras 6a. Sur la poignée est monté l'organe à commande manuelle 60 tel un potentiomètre-interrupteur de type rotatif. Une plaquette 4a prolonge la poignée 4 dans l'axe du demi-bras 6a et elle est destinée à supporter la carte-score, des "tee" et des balles, avec éventuellement présence d'un petit boîtier de rangement.

Le demi-bras 6b reçoit à son extrémité opposée à l'axe de pivotement A un embout tubulaire 7 en matière plastique qui forme de troisième point d'appui du chariot (les deux autres points étant constituées par les roues 3). Cet embout 7 porte un premier berceau 7a sur lequel prend appui le sac maintenu par des sangles par exemple (non représentées). Vers son autre extrémité, le demi-bras 6b supporte un deuxième berceau 8a dont le pied 8 est traversé de part en part par une ouverture de manière à le monter coulissant sur le demi-bras 6b du côté de son extrémité adjacente à l'axe de pivotement A.

Le support 1b du châssis est un élément plan de forme allongée 15 qui supporte à ses deux extrémités les deux roues 3.

Le dispositif de liaison rotatif 5 entre les deux supports 1a, 1b du châssis est constitué comme décrit dans le document précité, et il comprend deux parties respectivement mâle 5a et femelle 5b en matière plastique emboîtées l'une dans l'autre et respectivement solidaires des deux supports 1a, 1b.

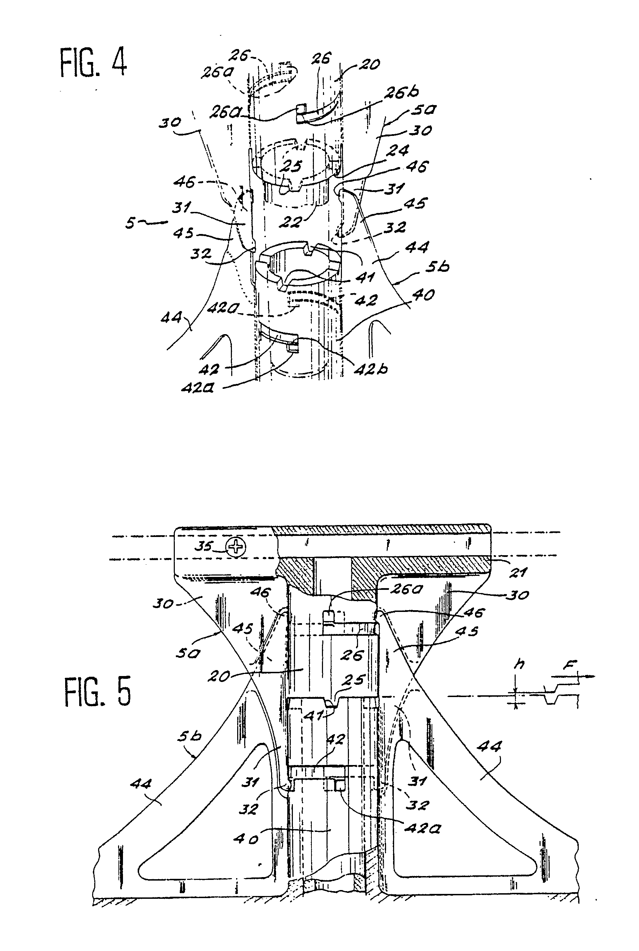

En se reportant aux figures 4 et 5, la partie mâle 5a, globalement en forme de T, présente un élément tubulaire central 20 à section circulaire raccordé, à une extrémité, à un élément tubulaire latéral 21 s'étendant perpendiculairement et de part et d'autre de l'élément tubulaire central 20. Cet élément central 20 se prolonge axialement, à son autre extrémité, par un tube 22 à section circulaire et de plus petit diamètre. L'élément tubulaire central 20 et le tube 22 délimitent entre eux un épaulement extérieur annulaire 24 à la surface duquel font saillie quatre bossages axiaux 25 formant butée circonférentiellement régulièrement espacés les uns des autres. La surface périphérique externe de l'élément tubulaire central 20 présente deux rainures 26, coplanaires, diamétralement opposées et qui s'étendent respectivement sur deux secteurs angulaires de l'ordre de 90°. Vers chaque extrémité de chaque rainure 26 et à un niveau différent de celui de la rainure 26, la surface périphérique externe de l'élément tubulaire central 20 présente une encoche 26a séparée de la rainure 26 par une nervure 26b. Enfin, la partie mâle 5a est complétée par deux éléments raidisseurs 30 qui prolongent l'élément tubulaire latéral 21 de part et d'autre de l'élément tubulaire central 20 et qui sont reliés à ce dernier. Ces éléments raidisseurs 30 s'étendent sur la longueur de l'élément tubulaire central 20 et se prolongent chacun par une patte 31 qui s'étend sur une partie de la longueur du tube 22 et qui se termine, radialement vers l'intérieur, par un pion 32. Les deux éléments raidisseurs 30 et les pattes 31 sont situés dans un plan passant par deux extrémités diamétralement opposées des deux rainures 26 et par deux butées 25 diamétralement opposées de l'élément tubulaire central 20. La partie mâle 5a est engagée par une extrémité sur le demi-bras 6b du manche de manoeuvre par l'intermediaire de son élément tubulaire latéral 21 et est fixée ensuite en position le long du demi-bras 6b au moyen d'une vis 35 par exemple.

La partie femelle 5b est constituée par un élément tubulaire 40 d'une seule pièce avec l'élément 15 formant le second support 1b du châssis 1. Cet élément tubulaire 40 est situé au centre de l'élément 15, s'étend perpendiculairement à ce dernier et présente une section circulaire avec un diamètre intérieur légèrement supérieur à celui du tube 22 de la partie mâle 5a, et un diamètre extérieur sensiblement égal à celui de l'élément tubulaire central 20 de la partie mâle 5a. A sa surface d'extrémité libre, l'élément tubulaire 40 présente quatre encoches 41 circonférentiellement régulièrement espacées les unes des autres. D'une manière semblable à l'élément tubulaire central 20 de la partie mâle 5a, la surface périphérique externe de l'élément tubulaire 40 présente : deux rainures 42, coplanaires, diamétralement opposées et qui s'étendent chacune sur un secteur angulaire d'environ 90°; deux encoches 42a respectivement vers les deux extrémités de chaque rainure 42, situées à un niveau différent de celui de la rainure 42 associée et séparées de celle-ci par une nervure 42b. La structure de la partie femelle 5b est également complétée par deux éléments raidisseurs 44, diamétralement opposés et qui se raccordent chacun à l'élément 15 formant le second support 1b et à l'élément tubulaire 40. Chaque élément raidisseur 44 se prolonge au-delà de la surface d'extrémité libre de l'élément tubulaire 40 par une patte 45 terminée par un pion 46 s'étendant radialement vers l'intérieur.

En se reportant plus particulièrement aux figures 1, 2 et 6, le moteur M est logé dans un boîter 50 de forme allongée constitué de deux demi-boîtiers en matière plastique assemblés l'un à l'autre par des vis par exemple. Le boîtier 50 est rapporté autour du support 1b du châssis 1.

La batterie B est également logée dans un boîtier 51 formé de deux demi-boîtiers en matière plastique assemblés l'un à l'autre par des vis par exemple. Le boîtier 51 se divise en deux compartiments 51a, 51b renfermant des éléments de batterie et raccordés l'un à l'autre par une partie centrale 52 de moindre épaisseur.

Le boîtier 51 vient reposer sur le boîtier 50 et se positionne sur celui-ci par des pions 53 qui pénètrent respectivement dans deux trous 54 du boîtier 50.

Dans cette position, la partie centrale 52 du boîtier 51 vient en appui contre l'élément tubulaire 40 de la partie femelle 5b du dispositif de liaison 5. Pour maintenir la batterie B en position, il est prévu un élément de verrouillage 55 tel un crochet à grenouillère monté sur la partie centrale 52 du boîtier 51, et qui vient coopérer avec une butée 56 prévue à la surface extérieure de l'élément tubulaire 40 de la partie femelle 5b du dispositif de liaison 5.

Au niveau du compartiment 51b du boîtier 51, logeant la batterie B, est prévue une prise 57 qui sert, d'une part, à alimenter le circuit électronique 58 de variation de vitesse du moteur M par un câble électrique extérieur 59 et, d'autre part, de prise de raccordement pour recharger les élément de la batterie B sur une source d'alimentation externe.

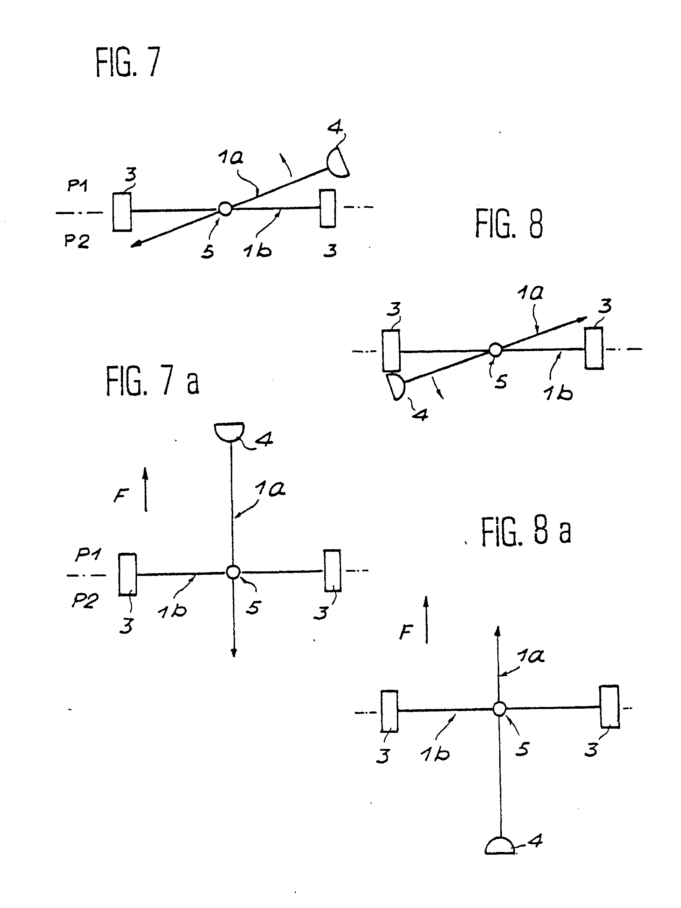

L'élément à commande manuelle 60 du moteur M situé au niveau de la poignée 4 est relié par la liaison L telle un câble électrique 61 qui passe à l'intérieur du demi-bras 6a, traverse en partie le demi-bras 6b pour déboucher à l'intérieur de l'élément tubulaire central 20 et de son prolongement 22 fomant de la partie mâle 5a du dispositif de liaison 5. L'extrémité libre du câble 61 est reliée à l'élément mâle 63a d'une prise intermédiaire ou connecteur monté à l'extrémité du tube 22. L'élément femelle 63b de ce connecteur est monté au fond de l'élément tubulaire 40 de la partie femelle 5b du dispositif de liaison 5. Cet élément femelle 63b est relié par un câble électrique 64 au circuit 58, comme schématiquement illustré à la figure 6. Le connecteur intermédiaire 63a, 63b est de forme cylindrique avec ses contacts mâles et ses contacts femelles répartis sur deux cercles de même diamètre. Lorsque les éléments mâle 63a et femelle 63b du connecteur sont emboîtés l'un dans l'autre, le connecteur n'assure pas pour autant une continuité électrique sur la liaison L suivant que le chariot est en position utilisation ou en position rangement. Cette continuité n'est assurée qu'en position utilisation du chariot. En choisissant par exemple un connecteur tel que le nombre de contacts mâles et femelles qui sont nécessaires à assurer la continuité de la liaison électrique L est inférieur au nombre de contacts mâles et femelles disponibles, il suffit de faire un choix approprié pour satisfaire les conditions précitées.

Le circuit électronique 58 de variation de la vitesse de rotation du moteur M, alimenté à partir de la batterie B et piloté à partir de l'organe de commande 60 situé sur la poignée 4, détermine la vitesse de rotation du moteur M et comprend notamment des éléments pour assurer une protection thermique contre l'échauffement du moteur M et limiter la consommation de la batterie.

En se reportant toujours à la figure 6, le moteur M est couplé à un moto-réducteur (non représente) qui entraîne en rotation un axe 70 sur les deux extrémités duquel sont montées les deux roues motrices 3 avec des roulements roue libre 71 connus en soi. Ainsi, avec de tels roulements, les roues 3 sont libres à rotation lorsque le chariot est tracté ou propulsé de façon manuelle sans l'aide du moteur M, et elles sont entraînées suivant un sens de rotation déterminé lorsque le moteur M est commandé.

Chaque roue 3, montée de manière amovible sur l'extrémité associée de l'axe 70, présente un enjoliveur 3a monté à rotation entre deux positions distantes d'un quart de tour. Chaque enjoliveur 3a est solidaire d'un élément tubulaire 72 dans lequel s'engage l'extrémité associé de l'axe 70, avec des moyens de couplage schématisés en 73 commandés par la rotation de l'enjoliveur 3a et qui pour les deux positions de l'enjoliveur 3a assurent l'accouplement et le désaccouplement entre la roue 3 et l'axe 70, respectivement.

Supposons le chariot tel que représenté à la figure 1, c'est-à-dire en position de stockage ou de rangement. Les deux supports 1a, 1b du châssis sont immobilisés axialement et en rotation. Autrement dit, en se reportant aux figures 3 et 4, les pions 32 et 46 sont positionnés dans les encoches 26a et 42a, et retenus par les nervures de franchissement 26b et 42b pour immobiliser axialement les deux supports 1a et 1b. Pour reforcer l'immobilisation axiale entre les deux supports 1a et 1b, il peut être prévu un moyen de fixation auxiliaire tel un bouton-poussoir dont le doigt 75, schématisé à la figure 1, traverse un trou 75a prévu dans l'élément tubulaire 40 de la partie femelle 5b du dispositif de liaison 5 et l'un de quatre trous 75b associés prévus dans le tube 22 de la partie mâle 5a du dispositif de liaison 5. Les quatre trous 75b sont nécessaires pour tenir compte des positions rangement et utilisation du chariot, et du fait que le manche 6a, 6b peut être monté suivant deux orientations à 180° l'une de l'autre (figures 7, 7a, 8 et 8a décrites plus loin). Enfin les butées 25 de la partie mâle 5a s'engagent dans les encoches 41 de la partie femelle 5b pour immobiliser en rotation les supports 1a et 1b.

Dans cette position, les éléments mâle et femelle 63a, 63b du connecteur intermédiaire sont emboîtés l'un dans l'autre, sans pour autant permettre la command du moteur M pour des raisons évidentes de sécurité.

Pour passer dans la position d'utilisation du chariot, on déverrouille les deux supports 1a, 1b du châssis en ramenant les pions 32 et 46 dans les rainures 26 et 42, respectivement, après avoir débloqué le doigt de verrouillage 75. Pour cela, on écarte les deux supports 1a, 1b l'un de l'autre en exerçant une légère force de traction sur l'un des supports suivant l'axe du dispositif de liaison 5 pour dégager, d'une part, les pions 32, 46 des encoches 26a, 42a avec franchissement des nervures 26b, 42b de manière à ce que les pions 32, 46 se retrouvent dans les rainures 26, 42 et, d'autre part, les butées 25 des encoches 41. Cet écartement entre les deux supports 1a, 1b entraîne automatiquement la séparation des éléments mâle 63a et femelle 63b du connecteur intermédiaire. Ensuite, par une rotation de sensiblement 90°, on amène les pions 32 et 46 en butée contre l'autre extrémité des rainures 26 et 42, respectivement. Dans cette position intermédiaire, les éléments raidisseurs 30, 45 sont sensiblement à 90° l'un de l'autre, c'est-à-dire que l'axe des roues 3 est dans un plan perpendiculaire au manche de manoeuvre 6. Après cette rotation, on immobilise les deux supports 1a et 1b en excerçant une pression axiale suivant l'axe du dispositif de liaison 5 pour engager à nouveau les pions 32 et 46 dans les encoches 26a et 42a, respectivement, pour assurer une immobilisation axiale, pour engager à nouveau les butées 25 dans les encoches 41, respectivement, pour assurer une immobilisation en rotation, et pour emboîter à nouveau l'un dans l'autre les éléments mâle 63a et femelle 63b du connecteur. Dans ce cas, la continuité électrique est assurée au niveau du connecteur 63a, 63b, c'est-à-dire que le moteur M peut être commandé.

Il reste ensuite à déplier le demi-bras 6a du manche de manoeuvre 6 en le faisant pivoter autour de l'axe A. En se reportant à la figure 3, l'extrémité du demi-bras 6a, opposée à la poignée 4, vient se loger à l'intérieur du logement 17 du bloc 15 supporté par le demi-bras 6b, et d'une manière symétrique, le logement 17 du bloc 15 supporté par le demi-bras 6a vient recevoir l'extrémité du demi-bras 6b opposée à celle supportant l'embout 7 formant le 3ème point d'appui du chariot. Les logements 17 limitent le mouvement pivotant du demi-bras 6a, de manière à ce que les deux demi-bras 6a, 6b soient sensiblement dans le prolongement l'un de l'autre. Les rebords 17c des logements 17 forment un premier moyen de retenue des deux demi-bras 6a et 6b en position dépliée. Il est avantageusement prévu un deuxième moyen de retenue tel un crochet à grenouillère 80 porté par le bloc 15a du demi-bras 6a pour immobiliser les deux demi-bras 6a, 6b en position (figure 3).

Bien entendu, pour passer de la positioin utilisation à la position rangement du chariot, on effectue les mêmes opérations mais en sens inverse. Il est à noter, en se reportant à la figure 1, que les deux demi-bras 6a, 6b en position repliée du manche sont maintenus l'un à l'autre par une patte 81 en U élastiquement déformable prévue sur l'élément tubulaire central 20 de la partie mâle 5a du dispositif de liaison 5, cette patte 81 recevant le demi-bras 6a.

Le passage du chariot de la position rangement à la position utilisation est schématiquement illustré aux figures 7 et 7a. Le moteur M n'ayant qu'un seul sens de rotation, on va supposer qu'il entraîne le chariot suivant la flèche F, c'est-à-dire que le chariot est en position tractée compte-tenu de la position du manche de manoeuvre 6.

Comme illustré sur les figures 7, 7a et en considérant le chariot immobile, on peut définir deux demi-bras P1, P2 de part de d'autre d'une ligne passant par l'axe des roues 3. Dans ces conditions, en supposant les deux supports 1a et 1b du chariot désolidarisés l'un de l'autre, le support 1a peut être monté sur le support 1b avec la poignée 4 située soit dans le demi-plan P1 (figures 7, 7a), soit dans le demi-plan P2 (figures 8, 8a). Autrement dit, la position du manche de manoeuvre 6 par rapport à l'axe des roues 3 conditionne le fonctionnement tracté (figures 7, 7a) ou propulsé (figures 8, 8a) du chariot.

D'une manière avantageuse, les éléments constitutifs du chariot, mis à part les demi-bras 6a et 6b, sont des pièces en matière plastique venues de moulage pour diminuer le poids du chariot.

Bien entendu, l'invention n'est pas limitée au mode de réalisation décrit et donné qu'à titre d'exemple. En particulier, les moyens d'immobilisation axiale et en rotation des deux supports du châssis, les moyens de blocage des deux demi-bras du manche de manoeuvre peuvent être modifiés sans sortir du cadre de l'invention.

### Revendications

1. Chariot de golf motorisé, du type comprenant un châssis formé d'au moins deux supports assemblés l'un à l'autre par un dispositif de liaison de type rotatif constitué de deux parties mâle et femelle emboîtées l'une dans l'autre et respectivement solidaires des deux supports du châssis, les deux supports pouvant être écartés l'un de l'autre suivant l'axe de rotation du dispositif de liaison pour les libérer en rotation et leur permettre de prendre une position utilisation ou une position rangement, l'un de supports portant deux roues motrices, un moteur électrique et une batterie, l'autre support étant essentiellement constitué d'un manche de manoeuvre terminé à une extrémité par une poignée ayant un organe à commande manuelle relié au moteur par une liaison électrique incluant une prise intermédiaire, caractérisé en ce que les éléments mâle (63a) et femelle (63b) de la prise intermédiaire sont respectivement supportés par les deux parties mâle (5a) et femelle (5b) du dispositif de liaison (5) et sont alignées sur l'axe de rotation des deux supports (1a, 1b) du châssis.

2. Chariot de golf selon la revendication 1, caractérisé en ce que le manche de manoeuvre est formée de deux demi-bras (6a, 6b) articulés l'un à l'autre autour d'un axe de pivotement (A) excentré supporté par deux blocs (10a, 10b) respectivement montés vers les deux extrémités des demi-bras (6a, 6b).

3. Chariot de golf selon la revendication 2, caractérisé en ce que chaque demi-bras (6a, 6b) supporte un bloc (15a, 15b) pour limiter le mouvement pivotant entre les deux demi-bras (6a, 6b), chaque bloc (15a, 15b) comportant un logement (17) en forme de U dans lequel s'engage l'extrémité de l'autre demi-bras (6b, 6a).

4. Chariot de golf selon la revendication 3, caractérisé en ce que les blocs (10a, 15a; 10b, 15b) associés aux demi-bras (6a, 6b) sont en matière plastique et montés coulissant sur ceux-ci.

5. Chariot de golf selon la revendication 3, caractérisé en ce que l'un au moins des blocs (15a, 15b) supporte un élément de fixation (80) pour solidariser les demi-bras (6a, 6b) l'un à l'autre en position dépliée du manche de manoeuvre.

6. Chariot de golf selon la revendication 2, caractérisé en ce que le demi-bras (6a) supporte à une extrémité la poignée (4) en matière plastique.

7. Chariot de golf selon la revendication 6, caractérisé en ce que ledit demi-bras (6b) supporte deux berceaux (7a, 8a), le berceau (7a) étant supporté par un embout (7) monté à une extrémité du demi-bras (6b) et formant le troisième point d'appui du chariot.

8. Chariot de golf selon la revendication 1, caractérisé en ce que le batterie (B) est logée dans un boîtier (51) fixé de façon amovible sur un boîtier (50) dans lequel est logé le moteur (M).

9. Chariot de golf selon la revendication 8, caractérisé en ce qu'un élément de fixation (55) est prévu entre le boîtier (51) et l'un (1a) des supports (1a, 1b) du châssis.

10. Chariot de golf selon la revendication 9, caractérisé en ce que le boîtier (51) supporte une prise de raccordement (57) reliée au moteur (M) par une liaison électrique (59) et un circuit (58) de commande de vitesse de rotation dudit moteur.

11. Chariot de golf selon la revendication 1, caractérisé en ce que chaque roue (3) est monté de façon amovible et possède un enjoliveur (3a) mobile en rotation entre deux positions correspondant respectivement au blocage et au déblocage de la roue (3) sur l'axe moteur (70).

12. Chariot de golf selon la revendication 11, caractérisé en ce que chaque enjoliveur (3a) commande de façon sélective des moyens de couplage (73) de la roue associée (3) avec l'axe moteur (70).

13. Chariot de golf selon la revendication 11, caractérisé en ce que chaque roue (3) est montée sur l'axe moteur (70) avec des roulements roue libre (71).

14.- Chariot de golf selon la revendication 1, caractérisé en ce que les deux éléments mâle (63a) et femelle (63b) de la prise intermédiaire sont emboîtés l'un dans l'autre tant en position utilisation qu'en position rangement du chariot.

15.- Chariot de golf selon la revendication 14, caractérisé en ce que les deux éléments mâle (63a) et femelle (63b) de la prise intermédiaire sont séparés l'un de l'autre lors du passage de la position utilisation à la position rangement du chariot et vice versa.

16.- Chariot de golf selon la revendication 15, caratérisé en ce que le nombre de contacts de la prise intermédiaire (63a, 63b) est supérieur du nombre de contacts nécessaires pour assurer une continuité électrique au niveau de la prise.

17.- Chariot de golf selon la revendication 16, caractérisé en ce qu'un position rangement du chariot, la continuité électrique est interrompue au niveau de la prise intermédiaire (63a, 63b).

18.- Chariot de golf selon la revendication 15, caractérisé en ce que les deux éléments mâle (63a) et femelle (63b) de la prise intermédiaire sont séparés l'un de l'autre lorsque les deux supports (1a, 1b) du châssis (1) sont écartés l'un de l'autre suivant l'axe de rotation du dispositif de liaison (5).

FIG. 1

FIG. 6

FIG. 2

FIG. 3

FIG. 4

FIG. 5

FIG. 7

FIG. 8

FIG. 7 a

FIG. 8 a

Office européen
des brevets

**RAPPORT DE RECHERCHE
EUROPEENNE**

Numéro de la demande

**EP 90 40 2912**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 468 148  (UNICUM) <br> * Page 2, colonne de droite, lignes 46-49 * <br> − − − | 1 | B 62 D <br> 51/00 |
| A | US-A-3 907 056  (T.A. THOMAS) <br> * Colonne 3, lignes 46-48 * <br> − − − | 1 | |
| D,A | FR-A-2 621 251  (G.I.E. CAD'INOV) <br> * Figure 1 * <br> − − − − − | 1 | |

**DOMAINES TECHNIQUES
RECHERCHES (Int. Cl.5)**

A 63 B

Le présent rapport de recherche a été établi pour toutes les revendications

| Lieu de la recherche | Date d'achèvement de la recherche | Examinateur |
|---|---|---|
| La Haye | 07 janvier 91 | GERARD B.E. |